# FASCICULE DE BREVET EUROPEEN

(11) **EP 3 696 397 B1**
(45) Date de publication et mention de la délivrance du brevet: **10.11.2021**
(21) Numéro de dépôt: 20156733.6
(22) Date de dépôt: 11.02.2020
(51) Int. Cl.: F02K 1/72

(54) **NACELLE D'UN TURBOREACTEUR COMPORTANT UNE PORTE DE BLOCAGE ET UN SYSTEME DE DEPLOIEMENT DE LA PORTE DE BLOCAGE**
GONDEL EINES TURBOREAKTORS, DIE EINE BLOCKIERTÜR UND EIN SYSTEM ZUM EINSATZ EINER SOLCHEN BLOCKIERTÜR UMFASST
TURBOJET NACELLE COMPRISING A LOCKING DOOR AND A SYSTEM FOR THE DEPLOYMENT OF THE LOCKING DOOR

(30) Priorité: 18.02.2019 FR 1901603
(43) Date de publication de la demande: 19.08.2020
(73) Titulaire: AIRBUS OPERATIONS, 31060 Toulouse Cedex 9 (FR)
(72) Inventeur: CAZEAUX, Laurent, 31170 TOURNEFEUILLE (FR); ORTEU, Benoît, 31000 TOULOUSE (FR); DENOY, Olivier, 31370 FORGUES (FR); GANAPATHI RAJU, Sreekanth, 31700 Blagnac (FR)
(74) Mandataire: Cabinet Le Guen Maillet

(56) Documents cités:
- EP-A1- 3 379 068
- GB-A- 1 303 875
- GB-A- 2 045 179
- US-A1- 2006 185 464
- US-A1- 2012 079 805

## Description

### DOMAINE TECHNIQUE

La présente invention concerne une nacelle d'un turboréacteur double flux qui comporte au moins une porte de blocage et un système de déploiement, un turboréacteur double flux comportant une telle nacelle et un moteur, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur, une nacelle qui est fixée autour du moteur et une veine secondaire qui est entre le moteur et la nacelle et qui permet le passage d'un flux secondaire.

La nacelle comporte un capot fixe et un capot mobile à l'arrière du capot fixe et mobile en translation entre une position de fermeture et une position d'ouverture. En position de fermeture, le capot mobile est rapproché du capot fixe et forme une continuité aérodynamique. En position d'ouverture, le capot mobile est éloigné du capot fixe vers l'arrière, et ouvre une ouverture entre la veine secondaire et l'extérieur.

La nacelle comporte également au moins une porte de blocage qui est mobile entre une position escamotée dans laquelle elle est positionnée en dehors de la veine secondaire de manière à ne pas faire obstacle au flux secondaire, et une position déployée dans laquelle elle est positionnée en travers de la veine secondaire de manière à faire obstacle au flux secondaire pour le diriger radialement à travers l'ouverture vers l'extérieur de la nacelle.

Classiquement, la porte de blocage est montée mobile en rotation sur la structure de la nacelle et un système de déploiement vient la déplacer de la position escamotée à la position déployée lorsque le capot mobile passe de la position de fermeture à la position d'ouverture et inversement. Le système de déploiement peut comporter une bielle disposée dans la veine secondaire ce qui nécessite une découpe de la porte de blocage pour permettre le passage de ladite bielle lors de son déplacement.

Bien que le système de déploiement d'une telle porte de blocage donne entière satisfaction, il est souhaitable de trouver des systèmes de déploiement différents et en particulier un système de déploiement qui soit moins encombrant et qui ne comporte pas de bielle dans la veine secondaire.

Le document GB-A-2 045 179 divulgue une nacelle de l'état de la technique.

### EXPOSE DE L'INVENTION

Un objet de la présente invention est de proposer une nacelle comportant au moins une porte de blocage et un système de déploiement.

A cet effet, est proposée une nacelle pour un turboréacteur double flux, ladite nacelle comportant :
- une structure fixe comportant un capot fixe,
- un capot mobile qui est mobile en translation par rapport au capot fixe selon une direction de translation parallèle à un axe longitudinal X entre une position de fermeture dans laquelle il est rapproché du capot fixe et une position d'ouverture dans laquelle il est éloigné du capot fixe vers l'arrière pour définir entre eux une ouverture entre une veine d'un flux secondaire et l'extérieur de la nacelle,
- des moyens moteur destinés à déplacer le capot mobile de la position de fermeture à une position intermédiaire puis à la position d'ouverture et inversement,
- une porte de blocage montée mobile en rotation autour d'un axe de rotation sur le capot mobile entre une position escamotée dans laquelle elle se positionne en dehors de la veine et une position déployée dans laquelle elle vient en travers de la veine, et
- un système de déploiement prévu pour coordonner et différer le passage de la position escamotée à la position déployée de la porte de blocage avec le passage de la position de fermeture à la position d'ouverture du capot mobile et inversement, ledit système de déploiement comportant :
- un bras comportant une première extrémité montée articulée sur la porte de blocage et une deuxième extrémité qui porte une butée,
- un coulisseau qui est fixé au bras,
- un système de guidage linéaire qui est fixe sur la structure fixe, et qui assure un guidage du coulisseau parallèlement à la direction de translation, et
- une came, où la butée est agencée pour venir contre la came lorsque le capot mobile atteint la position intermédiaire à partir de la position de fermeture et pour être guidée par ladite came de manière à entraîner la rotation du bras autour du coulisseau autour d'un axe de déploiement parallèle à l'axe de rotation, lorsque le capot mobile se déplace de la position intermédiaire à la position d'ouverture.

Un tel arrangement permet de ne pas avoir de bielle dans la veine réduisant d'autant son encombrement. En outre, le déploiement de la porte de blocage est retardé par rapport au déplacement du capot mobile.

Avantageusement, le système de guidage est une rainure dans laquelle le coulisseau se déplace, la rainure présente une extrémité arrière fermée, et la position de l'extrémité arrière fermée est définie de manière à ce que le coulisseau arrive contre l'extrémité arrière fermée en même temps que la butée arrive contre la came.

Avantageusement, l'articulation du bras sur la porte de blocage est disposée sur la face arrière de ladite porte de blocage.

Avantageusement, la came est montée fixe sur la structure fixe et comprend une rainure en arc de cercle.

Avantageusement, la came est montée mobile sur la structure fixe en rotation autour d'un axe de battement parallèle à l'axe de rotation entre une première position correspondant à la position escamotée et une deuxième position correspondant à la position déployée, et la came présente une première rainure en L dont une première branche est globalement parallèle à l'axe longitudinal X et dont une deuxième branche est globalement radiale par rapport à l'axe longitudinal X.

Avantageusement, le système de déploiement comporte également un élément de rappel qui contraint la came dans la première position.

Avantageusement, la came comporte également une deuxième rainure en arc de cercle centrée sur l'axe de déploiement et le coulisseau est agencé pour se déplacer dans la deuxième rainure lorsque la came pivote de la première position à la deuxième position.

L'invention propose également un turboréacteur double flux comportant un moteur et une nacelle selon l'une des variantes précédentes qui entoure le moteur, et où la veine est délimitée entre la nacelle et le moteur.

L'invention propose également un aéronef comportant au moins un turboréacteur double flux selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant une nacelle selon l'invention,
[Fig. 2] est une vue de côté et en coupe d'une nacelle selon l'invention en position de fermeture et en position escamotée,
[Fig. 3] est une vue similaire à la vue de la Fig. 2, mais en position d'ouverture et en position déployée,
[Fig. 4] est un agrandissement d'un système de déploiement selon un premier mode de réalisation de l'invention et correspondant au détail IV de la Fig. 2,
[Fig. 5] est un agrandissement du système de déploiement selon le premier mode de réalisation de l'invention et correspondant au détail V de la Fig. 3,
[Fig. 6] est un agrandissement similaire à celui de la Fig. 4 pour un système de déploiement selon un deuxième mode de réalisation de l'invention en position escamotée, et
[Fig. 7] est un agrandissement du système de déploiement selon le deuxième mode de réalisation de l'invention en position déployée.

### EXPOSE DETAILLE DE MODES DE REALISATION

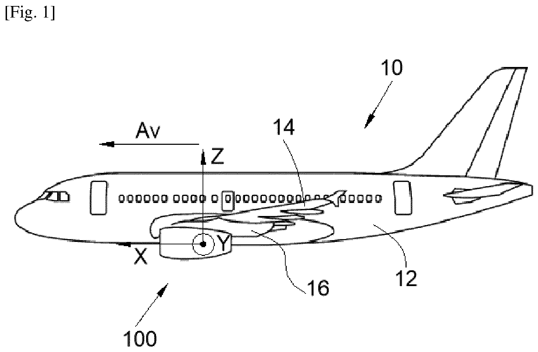

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16. Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles. Dans la suite de la description, les termes « avant » et « arrière» sont à considérer relativement au sens de déplacement de l'aéronef, matérialisé par une flèche Av sur la Fig. 1.

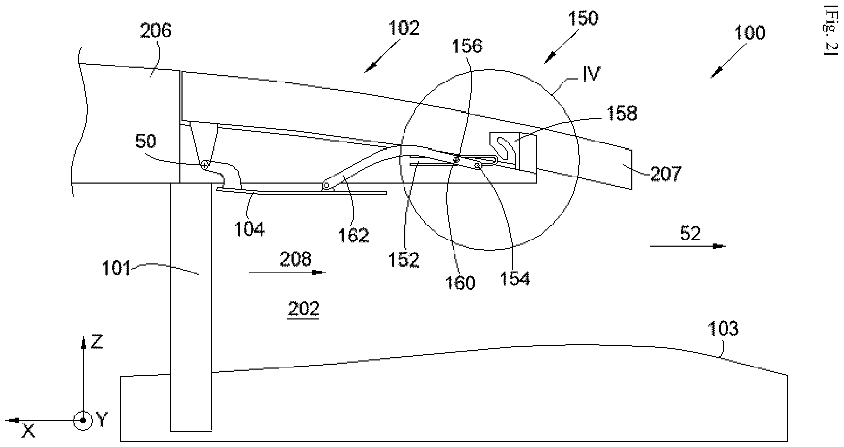

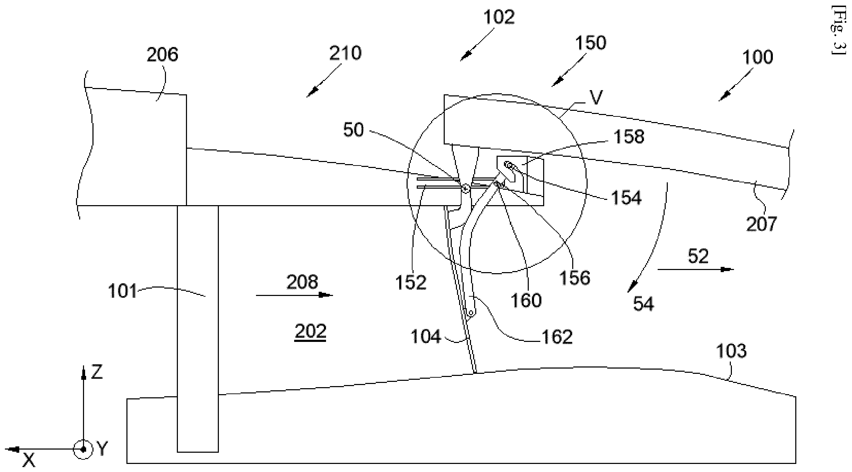

Les Figs. 2 et 3 montrent le turboréacteur double flux 100 qui comporte une nacelle 102 et un moteur qui est logé à l'intérieur de la nacelle 102. Le turboréacteur double flux 100 présente une veine 202 entre la nacelle 102 et le moteur dans laquelle circule le flux secondaire 208. Le moteur est matérialisé ici par son capotage 103.

La nacelle 102 comporte au moins une porte de blocage 104. En particulier, il peut y avoir deux portes de blocage 104 disposées l'une en face de l'autre, ou quatre portes de blocage 104 réparties régulièrement sur la périphérie de la nacelle 102. Chaque porte de blocage 104 permet selon sa position d'inverser la poussée du turboréacteur double flux 100.

Dans la description qui suit, l'invention est plus particulièrement décrite pour une porte de blocage 104, mais elle s'applique de la même manière pour chaque porte de blocage 104 lorsqu'il y en a plusieurs.

La nacelle 102 présente pour chaque porte de blocage 104, une ouverture 210 (Fig. 3) ouverte entre la veine 202 et l'extérieur de la nacelle 102.

La nacelle 102 présente un capot fixe 206 qui délimite l'ouverture 210 en avant par rapport à l'axe longitudinal X et qui est monté fixe sur une structure fixe 101 de la nacelle 102.

La nacelle 102 présente un capot mobile 207 qui délimite l'ouverture 210 en arrière par rapport à l'axe longitudinal X. Le capot mobile 207 est monté mobile en translation selon une direction de translation globalement parallèle à l'axe longitudinal X sur la structure fixe 101 et donc par rapport au capot fixe 206. La translation est réalisée par tous moyens appropriés comme par exemple des glissières.

Le capot fixe 206 et le capot mobile 207 présentent chacun une surface extérieure qui constitue l'enveloppe extérieure de la nacelle 102 et une surface intérieure qui constitue une paroi extérieure de la veine 202. Le capotage 103 du moteur constitue une paroi intérieure de la veine 202.

Le capot mobile 207 est mobile entre une position de fermeture (Fig. 2) dans laquelle il est rapproché du capot fixe 206 et une position d'ouverture (Fig. 3) dans laquelle il est éloigné du capot fixe 206 vers l'arrière de manière à élargir l'ouverture 210. Le sens de déplacement de la position de fermeture à la position d'ouverture est représenté par la flèche 52.

La nacelle 102 comporte également des moyens moteur pour déplacer le capot mobile 207 de la position de fermeture à la position d'ouverture et inversement, et ils peuvent comporter, par exemple des vérins, vis à billes, moteurs ou tout autre moyen approprié pour déplacer un élément en translation. Les moyens moteur sont commandés par une unité de contrôle, du type processeur, qui commande par exemple l'allongement et le raccourcissement des vérins selon les besoins de l'aéronef 10.

La porte de blocage 104 est montée mobile en rotation autour d'un axe de rotation 50 sur le capot mobile 207 entre une position escamotée (Fig. 2) et une position déployée (Fig. 3) pour laquelle l'inversion de poussée a une efficacité maximale. Dans le mode de réalisation de l'invention présenté sur les Figs. 2 et 3, l'axe de rotation 50 est perpendiculaire à l'axe longitudinal X. L'axe de rotation 50 est ici au niveau du bord avant de la porte de blocage 104. Le sens de rotation entre la position escamotée et la position déployée est représenté par la flèche 54.

L'axe de rotation 50 est dans un plan sensiblement perpendiculaire à une direction radiale par rapport à l'axe longitudinal X.

En position escamotée, la porte de blocage 104 se positionne en dehors de la veine 202. En position d'ouverture, le capot mobile 207 est déplacé vers l'arrière pour faciliter la manœuvre de la porte de blocage 104 qui passe de la position escamotée à la position déployée.

Lorsque la porte de blocage 104 est en position déployée, la porte de blocage 104 vient en travers de la veine 202 et dévie au moins une partie du flux secondaire 208 vers l'extérieur à travers l'ouverture 210. En position déployée, le bord libre de la porte de blocage 104 se rapproche du capotage 103 du moteur. Sur la Fig. 3, la porte de blocage 104 est abaissée en position déployée.

Le passage de la position escamotée à la position déployée de la porte de blocage 104 est coordonné et différé par rapport au passage de la position de fermeture à la position d'ouverture du capot mobile 207 et inversement.

Lors du passage de la position escamotée à la position déployée, la rotation de la porte de blocage 104 commence lorsque le capot mobile 207 passe par une position intermédiaire entre la position de fermeture et la position d'ouverture. A l'inverse, lors du passage de la position déployée à la position escamotée, la rotation de la porte de blocage 104 s'arrête lorsque le capot mobile 207 passe par la position intermédiaire en revenant de la position d'ouverture vers la position de fermeture.

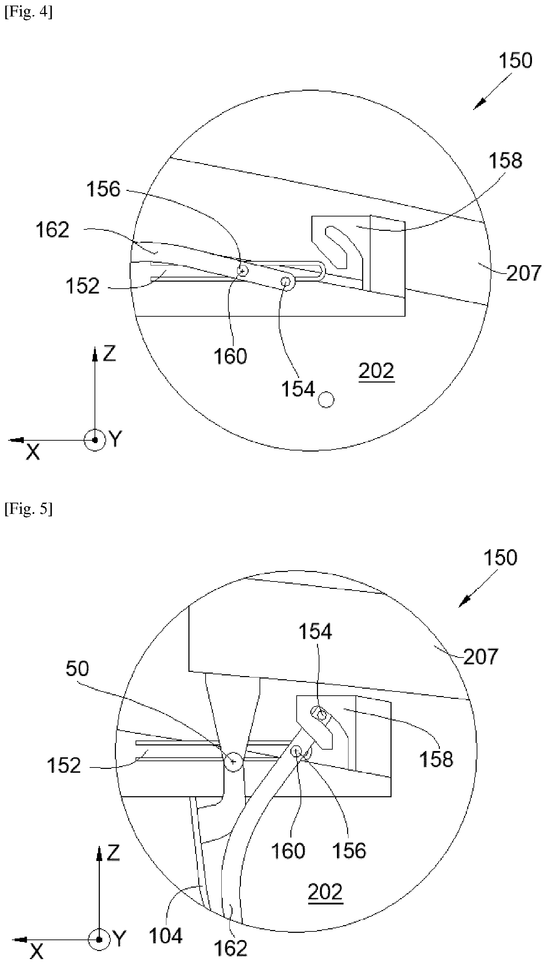

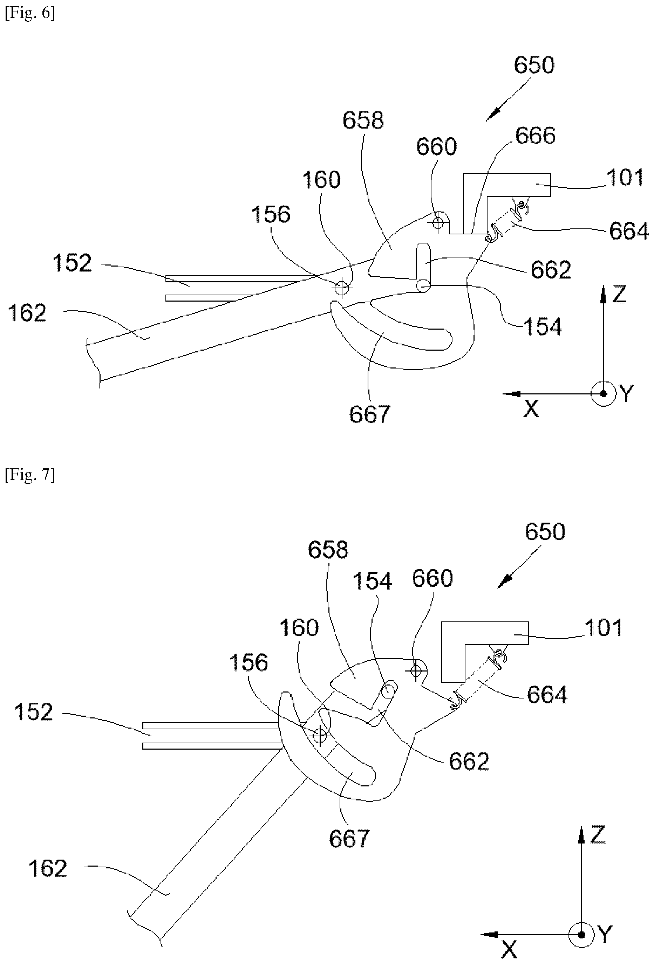

Cette coordination et ce décalage sont assurés par un système de déploiement 150, 650. Les Figs. 4 et 5 montrent un système de déploiement 150 selon un premier mode de réalisation de l'invention, et les Figs. 6 et 7 montrent un système de déploiement 650 selon un deuxième mode de réalisation de l'invention.

Dans les deux modes de réalisation, le système de déploiement 150, 650 comporte :
- un bras 162 comportant une première extrémité montée articulée sur la porte de blocage 104 et une deuxième extrémité qui porte une butée 154,
- un coulisseau 156 qui est fixé au bras 162,
- un système de guidage 152 linéaire qui est fixe sur la structure fixe 101, et qui assure un guidage du coulisseau 156 parallèlement à la direction de translation, et
- une came 158, 658, où la butée 154 est agencée pour venir contre la came 158, 658 lorsque le capot mobile 207 atteint la position intermédiaire à partir de la position de fermeture et pour être guidée par ladite came 158, 658 de manière à entraîner la rotation du bras 162 autour du coulisseau 156 autour d'un axe de déploiement 160 parallèle à l'axe de rotation 50, lorsque le capot mobile 207 se déplace de la position intermédiaire à la position d'ouverture.

Le coulisseau 156 reste guidé par le système de guidage 152 tout le long de la manœuvre de la position de fermeture/escamotée à la position d'ouverture/déployée et inversement.

Le système de déploiement 150, 650 reste ainsi hors de la veine 202.

Le système de déploiement 150, 650 est disposé à l'arrière de l'axe de rotation 50 et de la porte de blocage 104 et vers l'extérieur par rapport à la veine 202, c'est-à-dire globalement dans le capot mobile 207.

Ici, le système de guidage 152 est une rainure dans laquelle le coulisseau 156 se déplace et la rainure est ici fermée à son extrémité arrière pour éviter la sortie du coulisseau 156 et facilite alors la rotation lorsque le coulisseau 156 atteint l'extrémité arrière fermée. La position de l'extrémité arrière fermée est alors définie pour que le coulisseau 156 arrive contre l'extrémité arrière fermée en même temps que la butée 154 arrive contre la came 158, 658. L'articulation du bras 162 sur la porte de blocage 104 est disposée sur la face arrière de ladite porte de blocage 104, c'est-à-dire la face orientée vers l'arrière lorsque la porte de blocage 104 est en position déployée.

Lorsque le capot mobile 207 se déplace de la position de fermeture à la position d'ouverture, le coulisseau 156 est guidé par le système de guidage 152 et tant que la butée 154 n'entre pas en contact avec la came 158, 658, la porte de blocage 104 reste immobile. Lorsque la butée 154 arrive en contact avec la came 158, 658, celle-ci contraint la butée 154 à se déplacer, ce qui entraîne la rotation du bras 162 autour du coulisseau 156 et le déploiement de la porte de blocage 104 vers la position déployée. Il y a donc un retard au basculement de la porte de blocage 104. A l'inverse, lorsque le capot mobile 207 se déplace de la position d'ouverture à la position de fermeture, la butée 154 suit à nouveau la came 158, 658 mais en sens inverse de manière à ramener le bras 162 en position initiale par rotation autour du coulisseau 156 et la porte de blocage 104 à sa position escamotée. Ensuite, la butée 154 est libérée de la came 158, 658 et le coulisseau 156 se déplace le long du système de guidage 152 pour revenir en position de fermeture.

La position intermédiaire correspond ici au moment où la butée 154 arrive en contact de la came 158, 658 ou quitte le contact de la came 158, 658.

Dans le premier mode de réalisation de l'invention, la came 158 est montée fixe sur la structure fixe 101 et comprend une rainure en arc de cercle qui est globalement centrée sur l'axe de déploiement 160 lorsque la butée 154 arrive contre la came 158.

Dans le deuxième mode de réalisation, la came 658 est montée mobile en rotation sur la structure fixe 101 autour d'un axe de battement 660 parallèle à l'axe de rotation 50. La came 658 présente une première rainure 662 en L dont une première branche est globalement parallèle à l'axe longitudinal X et dont une deuxième branche est globalement radiale par rapport à l'axe longitudinal X.

Au cours du déplacement de la position de fermeture à la position intermédiaire, la butée 154 se déplace d'abord en dehors de la première rainure 662, puis le long de la première branche et arrive en contact avec la deuxième branche (Fig. 6) et la poursuite de la translation du capot mobile 207 vers la position d'ouverture entraîne le basculement de la came 658 autour de son axe de battement 660 et le déplacement de la butée 154 le long de la deuxième branche (Fig. 7), ce qui entraîne la rotation du bras 162 autour du coulisseau 156 et le déplacement de la porte de blocage 104 en position déployée. La came 658 passe alors d'une première position (Fig. 6) correspondant à la position escamotée à une deuxième position (Fig. 7) correspondant à la position déployée. Un déplacement inverse permet le retour en position de fermeture/escamotée.

Le système de déploiement 650 comporte également un élément de rappel 664 qui contraint la came 658 dans la première position correspondant à la position escamotée. Ici, l'élément de rappel 664 est un ressort de traction fixé entre la structure fixe 101 et la came 658. L'élément de rappel 664 facilite le retour de la came 658 dans la première position lors du déplacement de la position d'ouverture vers la position de fermeture.

Pour arrêter la came 658 en première position, la came 658 vient en butée contre la structure fixe 101 au niveau d'une surface d'appui 666.

L'axe de déploiement 660 est ici à l'extérieur et en arrière de la deuxième branche.

La came 658 comporte également une deuxième rainure 667 en arc de cercle centrée sur l'axe de déploiement 660 et le coulisseau 156 est agencé pour se déplacer dans la deuxième rainure 667 lorsque la came 658 pivote entre la première position (à partir de la position intermédiaire) et la deuxième position correspondant à la position déployée. L'introduction du coulisseau 156 dans la deuxième rainure 667 bloque de manière supplémentaire le recul du bras 162.

## Revendications

1. Nacelle (102) pour un turboréacteur double flux (100), ladite nacelle (102) comportant :
- une structure fixe (101) comportant un capot fixe (206),
- un capot mobile (207) mobile en translation par rapport au capot fixe (206) selon une direction de translation parallèle à un axe longitudinal X entre une position de fermeture dans laquelle il est rapproché du capot fixe (206) et une position d'ouverture dans laquelle il est éloigné du capot fixe (206) vers l'arrière pour définir entre eux une ouverture (210) entre une veine (202) d'un flux secondaire (208) et l'extérieur de la nacelle (102),
- des moyens moteur destinés à déplacer le capot mobile (207) de la position de fermeture à une position intermédiaire puis à la position d'ouverture et inversement,
- une porte de blocage (104) montée mobile en rotation autour d'un axe de rotation (50) sur le capot mobile (207) entre une position escamotée dans laquelle elle se positionne en dehors de la veine (202) et une position déployée dans laquelle elle vient en travers de la veine (202), et
- un système de déploiement (150, 650) prévu pour coordonner et différer le passage de la position escamotée à la position déployée de la porte de blocage (104) avec le passage de la position de fermeture à la position d'ouverture du capot mobile (207) et inversement, ledit système de déploiement (150, 650) comportant :
- un bras (162) comportant une première extrémité montée articulée sur la porte de blocage (104) et une deuxième extrémité qui porte une butée (154),
- un coulisseau (156) qui est fixé au bras (162),
- un système de guidage (152) linéaire qui est fixe sur la structure fixe (101), et qui assure un guidage du coulisseau (156) parallèlement à la direction de translation, et
- une came (158, 658), où la butée (154) est agencée pour venir contre la came (158, 658) lorsque le capot mobile (207) atteint la position intermédiaire à partir de la position de fermeture et pour être guidée par ladite came (158, 658) de manière à entraîner la rotation du bras (162) autour du coulisseau (156) autour d'un axe de déploiement (160) parallèle à l'axe de rotation (50), lorsque le capot mobile (207) se déplace de la position intermédiaire à la position d'ouverture.

2. Nacelle (102) selon la revendication 1, **caractérisée en ce que** le système de guidage (152) est une rainure dans laquelle le coulisseau (156) se déplace, **en ce que** la rainure est fermée à son extrémité arrière, et **en ce que** la position de l'extrémité arrière fermée est définie de manière à ce que le coulisseau (156) arrive contre l'extrémité arrière fermée en même temps que la butée (154) arrive contre la came (158, 658).

3. Nacelle (102) selon l'une des revendications 1 ou 2, **caractérisée en ce que** l'articulation du bras (162) sur la porte de blocage (104) est disposée sur la face arrière de ladite porte de blocage (104).

4. Nacelle (102) selon l'une des revendications 1 à 3, **caractérisée en ce que** la came (158) est montée fixe sur la structure fixe (101) et comprend une rainure en arc de cercle.

5. Nacelle (102) selon l'une des revendications 1 à 3, **caractérisée en ce que** la came (658) est montée mobile sur la structure fixe (101) en rotation autour d'un axe de battement (660) parallèle à l'axe de rotation (50) entre une première position correspondant à la position escamotée et une deuxième position correspondant à la position déployée, et **en ce que** la came (658) présente une première rainure (662) en L dont une première branche est globalement parallèle à l'axe longitudinal X et dont une deuxième branche est globalement radiale par rapport à l'axe longitudinal X.

6. Nacelle (102) selon la revendication 5, **caractérisée en ce que** le système de déploiement (650) comporte également un élément de rappel (664) qui contraint la came (658) dans la première position.

7. Nacelle (102) selon l'une des revendications 5 ou 6, **caractérisée en ce que** la came (658) comporte également une deuxième rainure (667) en arc de cercle centrée sur l'axe de déploiement (660) et **en ce que** le coulisseau (156) est agencé pour se déplacer dans la deuxième rainure (667) lorsque la came (658) pivote de la première position à la deuxième position.

8. Turboréacteur double flux (100) comportant un moteur et une nacelle (102) selon l'une des revendications précédentes qui entoure le moteur, et où la veine (202) est délimitée entre la nacelle (102) et le moteur.

9. Aéronef (10) comportant au moins un turboréacteur double flux (100) selon la revendication précédente.

## Patentansprüche

1. Gondel (102) für ein Zweistrom-Turbostrahltriebwerk (100), wobei die Gondel (102) Folgendes aufweist:
- eine feste Struktur (101), die eine feste Haube (206) aufweist,
- eine bewegliche Haube (207), die bezüglich der festen Haube (206) in einer parallel zu einer Längsachse X verlaufenden Translationsrichtung zwischen einer Schließposition, in der sie der festen Haube (206) angenähert ist, und einer Öffnungsposition, in der sie von der festen Haube (206) nach hinten entfernt ist, translationsbeweglich ist, um zwischen ihnen eine Öffnung (210) zwischen einem Gang (202) eines Sekundärstroms (208) und dem Äußeren der Gondel (102) zu definieren,
- Antriebsmittel, die dazu bestimmt sind, die bewegliche Haube (207) aus der Schließposition in eine Zwischenposition und dann in die Öffnungsposition und umgekehrt zu bewegen,
- eine Sperrtür (104), die drehbeweglich um eine Rotationsachse (50) zwischen einer eingeklappten Position, in der sie sich außerhalb des Gangs (202) positioniert, und einer ausgebrachten Position, in der sie über dem Gang (202) liegt, an der beweglichen Haube (207) montiert ist, und
- ein Ausbringsystem (150, 650), das dazu vorgesehen ist, den Übergang aus der eingeklappten Position in die ausgebrachte Position der Sperrtür (104) mit dem Übergang aus der Schließposition in die Öffnungsposition der beweglichen Haube (207) und umgekehrt zu koordinieren und aufzuschieben, wobei das Ausbringsystem (150, 650) Folgendes aufweist:
- einen Arm (162), der ein erstes Ende, das an der Sperrtür (104) gelenkig montiert ist, und ein zweites Ende, das einen Anschlag (154) trägt, aufweist,
- einen Schieber (156), der an dem Arm (162) befestigt ist,
- ein lineares Führungssystem (152), das an der festen Struktur (101) festliegt und das gewährleistet, dass der Schieber (156) parallel zu der Translationsrichtung geführt wird, und
- einen Nocken (158, 658), wobei der Anschlag (154) dazu ausgestaltet ist, an dem Nocken (158, 658) zur Anlage zu kommen, wenn die bewegliche Haube (207) aus der Schließposition die Zwischenposition erreicht, und von dem Nocken (158, 658) so geführt zu werden, dass der Arm (162) um den Schieber (156) um eine parallel zu der Rotationsachse (50) verlaufende Ausbringachse (160) drehangetrieben wird, wenn sich die bewegliche Haube (207) aus der Zwischenposition in die Öffnungsposition bewegt.

2. Gondel (102) nach Anspruch 1, **dadurch gekennzeichnet, dass** das Führungssystem (152) eine Nut ist, in der sich der Schieber (156) bewegt, dass die Nut an ihrem hinteren Ende geschlossen ist und dass die Position des geschlossenen hinteren Endes so definiert ist, dass der Schieber (156) zur gleichen Zeit an dem geschlossenen hinteren Ende ankommt, wie der Anschlag (154) an dem Nocken (158, 658) ankommt.

3. Gondel (102) nach einem der Ansprüche 1 oder 2, **dadurch gekennzeichnet, dass** die Anlenkung des Arms (162) an der Sperrtür (104) an der hinteren Fläche der Sperrtür (104) angeordnet ist.

4. Gondel (102) nach einem der Ansprüche 1 bis 3, **dadurch gekennzeichnet, dass** der Nocken (158) fest an der festen Struktur (101) montiert ist und eine kreisbogenförmige Nut umfasst.

5. Gondel (102) nach einem der Ansprüche 1 bis 3, **dadurch gekennzeichnet, dass** der Nocken (658) drehbeweglich um eine parallel zu der Rotationsachse (50) verlaufende Auslenkungsachse (660) zwischen einer ersten Position, die der eingeklappten Position entspricht, und einer zweiten Position, die der ausgebrachten Position entspricht, an der festen Struktur (101) montiert ist und dass der Nocken (658) eine erste L-Nut (662) aufweist, bei der ein erster Ast allgemein parallel zu der Längsachse X verläuft und bei der ein zweiter Ast allgemein radial bezüglich der Längsachse X verläuft.

6. Gondel (102) nach Anspruch 5, **dadurch gekennzeichnet, dass** das Ausbringsystem (650) auch ein Rückholelement (664) aufweist, das den Nocken (658) in der ersten Position festhält.

7. Gondel (102) nach einem der Ansprüche 5 oder 6, **dadurch gekennzeichnet, dass** der Nocken (658) auch eine zweite kreisbogenförmige Nut (667) aufweist, die auf die Ausbringachse (660) zentriert ist, und dass der Schieber (156) dazu ausgestaltet ist, sich in der zweiten Nut (667) zu bewegen, wenn der Nocken (658) aus der ersten Position in die zweite Position schwenkt.

8. Zweistrom-Turbostrahltriebwerk (100), aufweisend ein Triebwerk und eine Gondel (102) nach einem der vorhergehenden Ansprüche, die das Triebwerk umgibt, und wobei der Gang (202) zwischen der Gondel (102) und dem Triebwerk begrenzt ist.

9. Luftfahrzeug (10), aufweisend mindestens ein Zweistrom-Turbostrahltriebwerk (100) nach dem vorhergehenden Anspruch.

## Claims

1. Nacelle (102) for a bypass turbojet (100), said nacelle (102) comprising:
- a fixed structure (101) comprising a fixed cowling (206),
- a movable cowling (207) movable in translation relative to the fixed cowling (206) in a translational direction parallel to a longitudinal axis X between a closed position, in which it is near to the fixed cowling (206), and an open position, in which it is remote from the fixed cowling (206), towards the rear, such as to define between them an opening (210) between a duct (202) for a secondary flow (208) and the exterior of the nacelle (102),
- drive means designed to move the movable cowling (207) from the closed position to an intermediate position, then to the open position, and vice versa,
- a blocking door (104) mounted to be movable in rotation about a rotation axis (50) on the movable cowling (207) between a stowed position, in which it is positioned outside the duct (202), and a deployed position, in which it lies across the duct (202), and
- a deployment system (150, 650) provided such as to coordinate and to delay the passage from the stowed position to the deployed position of the blocking door (104) relative to the passage from the closed position to the open position of the movable cowling (207), and vice versa, said deployment system (150, 650) comprising:
- an arm (162) comprising a first end mounted in an articulated manner on the blocking door (104) and a second end that bears a stop (154),
- a slider (156) that is fixed to the arm (162),
- a linear guide system (152) that is fixed on the fixed structure (101) and guides the slider (156) parallel to the translational direction, and
- a cam (158, 658), where the stop (154) is arranged such as to lie against the cam (158, 658) when the movable cowling (207) reaches the intermediate position from the closed position and such as to be guided by said cam (158, 658) in such a manner as to drive the rotation of the arm (162) about the slider (156) about an axis of deployment (160) parallel to the axis of rotation (50) when the movable cowling (207) moves from the intermediate position to the open position.

2. Nacelle (102) according to Claim 1, **characterized in that** the guide system (152) is a groove in which the slider (156) moves, **in that** the groove is closed at its rear end, and **in that** the position of the closed rear end is defined in such a manner that the slider (156) arrives against the closed rear end at the same time as the stop (154) arrives against the cam (158, 658).

3. Nacelle (102) according to one of Claims 1 or 2, **characterized in that** the articulation of the arm (162) on the blocking door (104) is arranged on the rear face of said blocking door (104).

4. Nacelle (102) according to one of Claims 1 to 3, **characterized in that** the cam (158) is mounted to be fixed on the fixed structure (101) and comprises a groove in the form of an arc of a circle.

5. Nacelle (102) according to one of Claims 1 to 3, **characterized in that** the cam (658) is mounted to be movable on the fixed structure (101) in rotation about an axis of deflection (660), parallel to the axis of rotation (50), between a first position corresponding to the stowed position and a second position corresponding to the deployed position, and **in that** the cam (658) has a first groove (662) in the form of an L, a first branch of which is globally parallel to the longitudinal axis X and a second branch of which is globally radial relative to the longitudinal axis X.

6. Nacelle (102) according to Claim 5, **characterized in that** the deployment system (650) also comprises a return element (664) that urges the cam (658) in the first position.

7. Nacelle (102) according to one of Claims 5 or 6, **characterized in that** the cam (658) also comprises a second groove (667) in the form of an arc of a circle centred on the axis of deployment (660) and **in that** the slider (156) is arranged such as to move in the second groove (667) when the cam (658) pivots from the first position to the second position.

8. Bypass turbojet (100) comprising an engine and a nacelle (102) according to one of the preceding claims that surrounds the engine, and where the duct (202) is delimited between the nacelle (102) and the engine.

9. Aircraft (10) comprising at least one bypass turbojet (100) according to the preceding claim.
